# EUROPÄISCHE PATENTSCHRIFT

(11) **EP 1 010 590 B1**
(45) Veröffentlichungstag und Bekanntmachung des Hinweises auf die Patenterteilung: **20.07.2005**
(21) Anmeldenummer: 99124180.3
(22) Anmeldetag: 03.12.1999
(51) Int. Cl.: B60R 21/20

(54) **Aufblasbares Insassenrückhaltesystem, insbesondere für Kraftfahrzeuge**
Occupant inflatable restraint system, in particular for vehicles
Système gonflable de retenue de passagers, pour véhicules en particulier

(30) Priorität: 15.12.1998 DE 19857753
(43) Veröffentlichungstag der Anmeldung: 21.06.2000
(73) Patentinhaber: ADAM OPEL AG, 65423 Rüsselsheim (DE)
(72) Erfinder: Rick, Ulrich, Dipl.-Ing., 55595 Roxheim (DE)
(74) Vertreter: Daniel, Ulrich W.P.

(56) Entgegenhaltungen:
- EP-A- 0 656 284
- EP-A- 0 873 915
- DE-A- 4 121 659
- DE-A- 19 705 099
- US-A- 5 344 182
- US-A- 5 785 348
- US-A- 5 791 680

## Beschreibung

Die Erfindung betrifft ein aufblasbares Insassenrückhaltesystem, insbesondere fur Kraftfahrzeuge, nach dem Oberbegriff des Patentanspruches 1.

Ein derartiges Insassenrückhaltesystem ist beispielsweise mit EP 0 633 168 A1 beschrieben. Dieses System weist im wesentlichen ein wannenartiges Gehäuse auf, in dem teilweise ein Gaskissen sowie ein Gasgenerator untergebracht sind. Der Gasgenerator ist dabei in einem Befestigungsgehäuse angeordnet, das derart ausgebildet und gegenüber dem Gasgenerator bzw. dem Gehäuse abgedichtet ist, dass der im Rückhaltefall durch den Gasgenerator erzeugte Gasstrom über die am Befestigungsgehäuse vorgesehenen Diffusoröffnungen zum gefalteten Abschnitt des Gaskissens geleitet wird.

Eine solche Ausführung weist jedoch den Nachteil auf, dass zur Lagesicherung des Gasgenerators sowie zur Bildung eines Diffusorraumes ein spezielles Befestigungsgehäuse notwendig ist, das seinerseits im Gehäuse befestigt bzw. abgedichtet werden muss. Dies beansprucht bei relativ hohem Gewicht viel Bauraum und ist mit einer umstandlichen Montage des Gasgenerators bzw. des Befestigungsgehäuses verbunden.
Aus der US 5 791 680 ist ein Insassenrückhaltesystem mit einem Gehäuse bekannt, in dem das Gaskissen und der Gasgenerator untergebracht sind, wobei das Gaskissen zwischen einer Gehausewand und einem gegenüberliegenden Gehäuserand gefaltet und der Gasgenerator in einem einteilig mit Gehäuse ausgebildeten Diffusorraum untergebracht ist. Zur Befestigung des Gaskissens am Gehäuse sind an diesem Aufnahmen vorgesehen, welche in Bezug auf eine das Gehäuse schließende Abdeckung derart ausgebildet sind, dass das Gaskissen bzw. Teile davon bei der Montage der Abdeckung nicht am Gehäuse eingeklemmt werden. Das Gaskissen wird bei dieser Losung in entsprechend am Gehäuse ausgebildeten Aufnahmen und der Gasgenerator im Diffusorraum des Gehäuses formschlussig montiert, wozu jeweils separate Montageschritte notwendig sind.
Bei der Losung nach der EP 0 873 915 A2 ist vorgesehen, dass mindestens eine Verbindungsstelle des Gaskissens stoffschlüssig mit dem Gehäuse verbunden ist, in dem sich mindestens ein Gasgenerator befindet. Ein Diffusorraum fur den Gasgenerator ist in der EP 0 873 915 A2 nicht offenbart.
Schließlich zeigt die US 5 344 182 ein Insassenrückhaltesystem, bei dem das Gehäuse ähnlich dem in der US 5 791 680 dargestellten Gehäuse zur Aufnahme sowohl des Gasgenerators als auch des Gaskissens ausgebildet ist. Der Diffusorraum für den Gasgenerator ist bei dieser Lösung ebenfalls einteilig mit dem Gehäuse ausgebildet.

Der Erfindung liegt daher die Aufgabe zugrunde, ein aufblasbares Insassenrückhaltesystem mit den Merkmalen des Oberbegriffs des Patentanspruches 1 zu schaffen, das relativ einfach und raumsparend aufgebaut ist, ohne dass die genannten Nachteile auftreten.

Diese Aufgabe wird erfindungsgemaß durch Merkmale des Patentanspruches 1 gelöst. Vorteilhafte Ausbildungen und Weiterbildungen der Erfindung sind Gegenstand der Unteranspruche.

Durch eine derartige Ausbildung der zwischen dem Gasgenerator und dem gefalteten oberen Abschnitt des Gaskissens angeordneten Wandung kann relativ einfach der sich im wesentlichen zwischen dieser in Bezug auf das Gehäuse separaten Wandung und dem Gasgenerator erstreckende Diffusorraum gebildet werden, ohne dass ein separates im Gehäuse des Insassenrückhaltesystems befestigbares Generator- bzw. Befestigungsgehause benotigt wird. Bei einer durch ein flexibles Material gebildeten Wandung kann diese direkt am Gasgenerator aufliegen, wodurch sich eine weitere Reduzierung der Abmessungen des Insassenrückhaltesystems ergibt. In diesem Falle wird bei der Aktivierung des Gasgenerators zunächst ein funktionsfähiger Diffusorraum gebildet, und dann der erzeugte Gasstrom über die Diffusoröffnungen der gespannten Wandung zum gefalteten oberen Abschnitt des Gaskissens geleitet.

Zur Bildung des Diffusorraumes und/oder zur Halterung am Gasgenerator kann das Gaskissen bzw. der die Wandung enthaltende untere Abschnitt vollständig den Gasgenerator umschließen. Die dabei notwendige Abdichtung des Diffusorraumes gegenüber dem Gasgenerator bzw. dem Gehäuse kann beispielsweise durch form- und/oder kraftschlüssiges Aufspannen oder Klemmen des Materials des Gaskissens am Gehäuse und/oder am Gasgenerator erfolgen.

Der Diffusorraum kann auch gemäß einer alternativen Ausführung der Erfindung durch ein separates, dem unteren Abschnitt zugeordnetes und die Wandung enthaltendes Bauteil gebildet werden, das den Gasgenerator zumindest teilweise umschließt. Dieses Bauteil kann aus dem gleichen Material wie das Gaskissen oder aus einem im Vergleich mit dem Material des Gaskissens stärkeren bzw. belastungsfähigeren Material bestehen.

Die Erfindung ist nachstehend anhand der in der Zeichnung dargestellten Ausführungsbeispiele näher erläutert. Es zeigen teilweise schematisch
- Fig. 1:: einen Längsschnitt durch eine erste Ausführungsform des erfindungsgemäßen Insassenrückhaltesystems mit einem durch Kunststoff gebildeten und den Diffusorraum enthaltenden unteren Abschnitt des Gaskissens;
- Fig. 2:: einen vergrößerten Querschnitt durch den unteren Abschnitt des Gaskissens nach Figur 1;
- Fig. 3:: einen Querschnitt gemäß Fig. 2, jedoch mit einer alternativen Ausbildung der Wandung des Diffusorraumes;
- Fig. 4:: einen Teilquerschnitt durch eine alternative Ausführungsform der Erfindung;
- Fig. 5:: einen Teilquerschnitt gemäß Fig. 4, jedoch mit einer anderen Ausbildung des unteren Abschnitts des Gaskissens;
- Fig. 6:: einen Schnitt durch ein alternatives Insassenrückhaltesystem mit einem teilweise durch das Gehäuse gebildeten Diffusorraum.

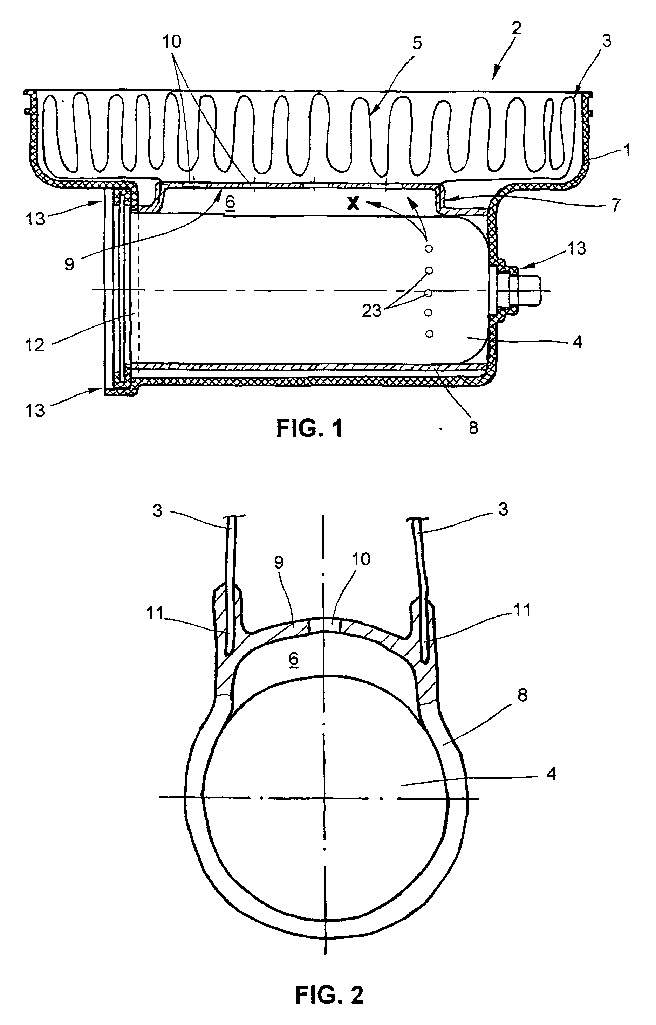

Fig. 1 zeigt ein Gehäuse 1 eines Insassenrückhaltesystems 2, in dem im wesentlichen ein Gaskissen 3 und ein Gasgenerator 4 untergebracht sind. Das Gaskissen 3 weist einen oberen gefalteten Abschnitt 5 sowie einen den Diffusorraum 6 enthaltenden unteren Abschnitt 7 auf, in dem sich der äußerlich die Form einer Kartusche aufweisende Gasgenerator 4 befindet. Am Gasgenerator 4 sind Gasaustrittsöffnungen 23 vorgesehen, die bei Aktivierung des Gasgenerators 4 einen Gasstrom (Pfeile X) in Richtung des Diffusorraumes 6 ermöglichen. Der untere Abschnitt 7 bzw. der Diffusorraum 6 wird dabei durch ein mit dem oberen Abschnitt 5 des Gaskissens 3 fest verbundenes und den Gasgenerator 4 umschließendes Kunststoffteil 8 gebildet, das auf eine nicht näher dargestellte Weise axial am Gehäuse 1 und radial am Gasgenerator 4 abgedichtet ist. Eine solche Abdichtung kann beispielsweise durch Aufspannung oder Klemmung am Gehäuse 1 und/oder am Gasgenerator 4 erfolgen.

Am Kunststoffteil 8 ist zur Abgrenzung gegenüber dem gefalteten Abschnitt 5 eine Wandung 9 vorgesehen, an der kreisrunde Diffusoröffnungen 10 vorgesehen sind. Das Kunststoffteil 8 ist, wie insbesondere aus Fig. 2 ersichtlich, im Bereich dieser Wandung 9 stoffschlüssig mit dem Gaskissen 3 verbunden, wobei ein entsprechend umlaufender Rand 11 des Gaskissens 3 in das Kunststoffteil 8 eingelassen bzw. eingegossen ist. Auf diese Weise kann das Gaskissen 3 zusammen mit dem den Diffusorraum 6 enthaltenden Kunststoffteil 8 als vorgefertigte Baueinheit im Gehäuse 1 montiert werden.

Zur Montage des Gasgenerators 4 ist an einer Seite des Gehäuses 1 eine Öffnung 12 (Fig. 1) vorgesehen, durch die der Gasgenerator 4 in das Kunststoffteil 8 bzw. den Diffusorraum 6 einschiebbar und an einer anderen, der Öffnung 12 gegenüberliegenden Seite des Gehäuses 1 befestigbar ist. Dazu sind an beiden Enden des Gasgenerators 4, am Kunststoffteil 8 sowie entsprechend an beiden Seiten des Gehäuses 1 miteinander korrespondierende Dicht- und Verbindungsmittel 13 vorgesehen, die derart ausgebildet und auf die Abmessungen von Gehäuse 1, Gasgenerator 4 und Kunststoffteil 8 abgestimmt sind, daß eine dichte Verbindung zwischen dem Gasgenerator 4 und dem Gehäuse 1, dem Kunststoffteil 8 und dem Gehäuse 1 sowie dem Kunststoffteil 8 und dem Gasgenerator 4 gewährleistet ist. Solche Dicht- und Verbindungsmittel 13 sind an sich bekannt und werden deswegen nicht weiter erläutert.

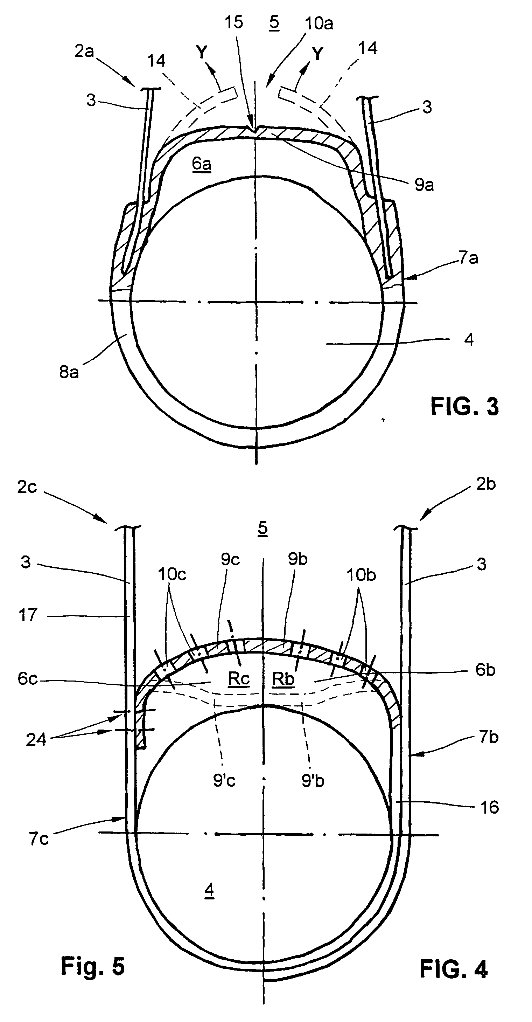

Der bei Aktivierung des Gasgenerators 4 erzeugte Gasstrom kann auch gleichmäßig verteilt zum gefalteten Abschnitt 5 des Gaskissens 3 geleitet werden, wenn die Diffusoröffnung 10a in der Wandung 9a, gemäß Fig. 3, durch schwenkbare Klappen 14 gebildet wird, die unter Einwirkung des im Diffusorraum 6a entstehenden Druckes gemäß den Pfeilen **Y** in ihre Öffnungsstellung schwenken. Solche schwenkbaren Klappen 14 können relativ einfach durch eine die Materialdicke der Wandung 9a reduzierende Nut 15 gebildet werden, die eine Aufreißung der Wandung 9a entlang dieser Nut 15 ermöglicht.

In Fig. 4 ist eine alternative Ausbildung des unteren Abschnitts 7b des Gaskissens 3 dargestellt, bei welcher zur Bildung des Diffusorraumes 6b ein separates, die Wandung 9b enthaltendes und den Gasgenerator 4 dicht umschließendes Bauteil 16 vorgesehen ist. Dieses Bauteil 16 besteht aus dem gleichen Material wie auch das Gaskissen 3, ist aber nicht direkt mit dem Gaskissen 3 verbunden. Bei dieser Ausführung umschließt das Gaskissen 3 bzw. der untere Abschnitt 7b von außen das Bauteil 16 und somit auch den Gasgenerator 4, wodurch beide Teile, Gaskissen 3 und das Bauteil 16, gemeinsam am Gasgenerator 4 gehalten sind.

Der Diffusorraum 6c kann besonders einfach gebildet werden, wenn die mit Diffusoröffnungen 10c versehene Wandung 9c, wie in Fig. 5 dargestellt, unmittelbar mit den Wänden 17 des den Gasgenerator 4 umschließenden unteren Abschnitts 7c des Gaskissens 3 verbunden ist. Die Wandung 9c ist dabei aus dem Material des Gaskissens 3 hergestellt und durch Nähen (bei Bezugsziffer 24) fest mit den Wänden 17 des unteren Abschnitts 7c verbunden. Eine solche Wandung 9c kann auch aus einem anderen Material, beispielsweise einem elastischen oder in sich stabilen Material, hergestellt und je nach Anforderungen durch Schweißen, Kleben oder Nieten an den Wänden 17 befestigt werden. Vorteilhaft dabei ist, daß die Form und/oder die Abmessungen des im allgemeinen etwa taschenförmigen Diffusorraumes 6c zumindest in der Breite für den Montagevorgang erhalten bleiben und damit das Einschieben des Gasgenerators 4 in den Diffusorraum 6c erleichtern.

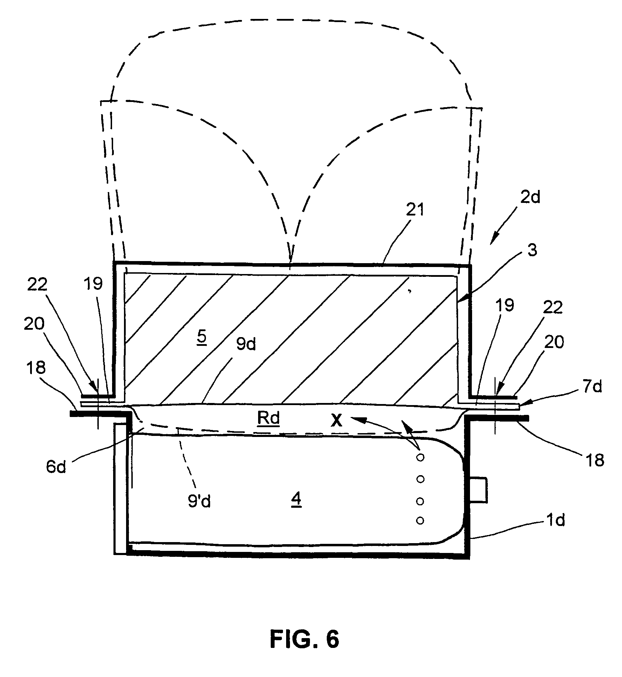

Bei einer weiteren Ausführung des Insassenrückhaltesystems 2d gemäß Fig. 6 ist der untere Abschnitt 7d des Gaskissens 3 derart ausgebildet und am Gehäuse 1d befestigt, daß im montierten Zustand eine ebenfalls mit Diffusoröffnungen (nicht dargestellt) versehene Wandung 9d den gefalteten Abschnitt 5 des Gaskissens 3 vom Gasgenerator 4 trennt. In diesem Falle wird der Diffusorraum 6d im wesentlichen durch das Gehäuse 1d gebildet, da die einteilig mit dem unteren Abschnitt 7d ausgebildete Wandung 9d lediglich den Diffusorraum 6d auf der zum gefalteten Abschnitt 5 zugewandten Seite begrenzt. Die Verbindung zwischen dem unteren Abschnitt 7d und dem Gehäuse 1d kann dabei entlang eines umlaufenden Gehäuserandes 18 erfolgen, wobei ein umlaufender, umgeschlagener und aufeinandergelegter Randbereich 19 des Gaskissens 3 zwischen dem Gehäuserand 18 und einem Befestigungsrand 20 einer Abdeckung 21 für den gefalteten Abschnitt 5 des Gaskissens 3 beispielsweise durch eine nicht näher dargestellte verschraubung 22 geklemmt ist.

Bei dieser Ausführung sowie auch bei den Ausführungen nach Fig. 4 und Fig. 5 kann das Insassenrückhaltesystem 2b-2d besonders kompakt ausgebildet werden, da die Wandung 9b-9d unmittelbar am Gasgenerator 4 aufliegen kann, wodurch ein zusätzlicher Raum **Rb**, **Rc**, **Rd** zwischen der durch den Gasdruck gespannten Wandung 9b-9d und der auf dem Gasgenerator 4 aufliegenden Wandung 9'b-9'd zur Unterbringung des gefalteten Abschnitts 5 des Gaskissens 3 bereitgestellt wird.

## Patentansprüche

1. Aufblasbares Insassenrückhaltesystem, insbesondere für Kraftfahrzeuge, mit einem Gaskissen, einem Gasgenerator zum Aufblasen des Gaskissens im Ruckhaltefall, einem innerhalb eines Gehäuses fur das Gaskissen und den Gasgenerator angeordneten Diffusorraum, in dem der Gasgenerator untergebracht ist, wobei zwischen dem Diffusorraum und einem gefalteten oberen Abschnitt des Gaskissens eine die Diffusoröffnungen enthaltende Wandung vorgesehen ist, **dadurch gekennzeichnet, dass** die Wandung (9-9d) an einem in Bezug auf das Gehäuse separaten, den Diffusorraum (6-6d) zumindest teilweise bildenden unteren Abschnitt (7-7d) des Gaskissens (3) vorgesehen ist.

2. Insassenrückhaltesystem nach Anspruch 1, **dadurch gekennzeichnet, daß** der untere Abschnitt (7-7a) durch ein mit dem Gaskissen (3) verbundenes Kunststoffteil (8, 8a) gebildet und die Wandung (9, 9a) an diesem Kunststoffteil (8, 8a) vorgesehen ist.

3. Insassenrückhaltesystem nach Anspruch 1 oder 2, **dadurch gekennzeichnet, daß** der Gasgenerator (3) im Gehäuse (1-1d) verankert ist und daß der untere Abschnitt (7-7c) bzw. das Kunststoffteil (8, 8a) zur Bildung des Diffusorraumes (6-6c) und/oder zur Abstützung am Gasgenerator (4) zumindest teilweise den Gasgenerator (4) umschließt.

4. Insassenrückhaltesystem nach einem der Ansprüche 1 bis 3, **dadurch gekennzeichnet, daß** die Wandung (9a) eine durch eine Sollbruchstelle (Nut 15) markierte schwenkbare Klappe (14) aufweist, die unter Einwirkung der im Gasgenerator (4) erzeugten Gasen zumindest teilweise die Diffusoröffnung (10a) bildet.

5. Insassenrückhaltesystem nach einem der Ansprüche 1 bis 4, **dadurch gekennzeichnet, daß** der untere Abschnitt (7-7d), das Kunststoffteil (8, 8a) oder die Wandung (9, 9a, 9c, 9d) mit dem übrigen Gaskissen (3) stoffschlüssig verbunden ist.

6. Insassenrückhaltesystem nach einem der Ansprüche 1 bis 5, **dadurch gekennzeichnet, daß** der untere Abschnitt (7-7d), das Kunststoffteil (8, 8a) oder die Wandung (9, 9a, 9c, 9d) mit dem übrigen Gaskissen (3) durch ein Schweißverfahren verbunden ist.

7. Insassenrückhaltesystem nach einem der Ansprüche 1 bis 4, **dadurch gekennzeichnet, daß** der untere Abschnitt (7-7d), das Kunststoffteil (8, 8a) oder die Wandung (9, 9a, 9c, 9d) mit dem übrigen Gaskissen (3) durch Kleben verbunden ist.

8. Insassenrückhaltesystem nach einem der Ansprüche 1 bis 4, **dadurch gekennzeichnet, daß** die Wandung (9c) mit dem Gaskissen (3) bzw. dem unteren Abschnitt (7c) durch Nähte, Nieten oder dergleichen verbunden ist.

9. Insassenrückhaltesystem nach einem der Ansprüche 1 bis 8, **dadurch gekennzeichnet, daß** das Gaskissen (3), der untere Abschnitt (7b-7d) und die Wandung (9b-9d) aus dem gleichen Material hergestellt sind.

10. Insassenrückhaltesystem nach einem der Ansprüche 1, 3 bis 5 und 9, **dadurch gekennzeichnet, daß** das Gaskissen (3), der untere Abschnitt (7, 7a, 7d) und die Wandung (9, 9a, 9d) einstückig ausgebildet sind.

11. Insassenrückhaltesystem nach einem der Ansprüche 1, 3, 4 und 9, **dadurch gekennzeichnet, daß** am unteren Abschnitt (7b) zur Bildung des Diffusorraumes (6b) ein separates, die Wandung (9b) enthaltendes und den Gasgenerator (4) zumindest teilweise dicht umschließendes Bauteil (16) vorgesehen ist.

12. Insassenrückhaltesystem nach Anspruch 11, **dadurch gekennzeichnet, daß** das den Diffusorraum (6b) bildende Bauteil (16) durch ein flexibles Gaskissenmaterial gebildet ist.

13. Insassenrückhaltesystem nach einem der Ansprüche 1 bis 12, **dadurch gekennzeichnet, daß** die den Diffusorraum (6-6d) bildende Teile des Gaskissens (3) bzw. des unteren Abschnitts (7-7d) am Gehäuse (1-1d) und/oder am Gasgenerator (4) durch ein form- und/oder kraftschlüssiges Aufspannen oder Klemmen abgedichtet sind.

14. Insassenrückhaltesystem nach einem der Ansprüche 1 bis 13, **dadurch gekennzeichnet, daß** auf der Innenseite des Diffusorraumes (6-6d) bzw. an der zum Gasgenerator (4) zugewandten Seite des Gaskissens (3), der Wandung (9-9d) bzw. des unteren Abschnitts (7-7d) eine thermische Beschichtung, vorzugsweise aus Neopren vorgesehen ist.

## Claims

1. Inflatable occupant restraint system, in particular for motor vehicles, with an air bag, a gas generator for inflating the air bag in the event of a restraining action and a diffusor chamber which is disposed inside a housing for the air bag and the gas generator and in which the gas generator is accommodated, wherein a wall, which contains the diffusor openings, is provided between the diffusor chamber and a folded upper portion of the air bag, **characterised in that** the wall (9-9d) is provided at a lower portion (7-7d), which is separate in relation to the housing and at least partly forms the diffusor chamber (6-6d), of the air bag (3).

2. Occupant restraint system according to Claim 1, **characterised in that** the lower portion (7-7a) is formed by a plastics part (8, 8a) which is connected to the air bag (3), and the wall (9, 9a) is provided at this plastics part (8, 8a).

3. Occupant restraint system according to Claim 1 or 2, **characterised in that** the gas generator (3) is anchored in the housing (1-1d), and that the lower portion (7-7c) or the plastics part (8, 8a) at least partly encloses the gas generator (4) in order to form the diffusor chamber (6-6c) and/or to provide support at the gas generator (4).

4. Occupant restraint system according to any one of Claims 1 to 3, **characterised in that** the wall (9a) comprises a pivotable flap (14) which is marked by a predetermined breaking point (groove 15) and at least partly forms the diffusor opening (10a) under the action of the gases generated in the gas generator (4).

5. Occupant restraint system according to any one of Claims 1 to 4, **characterised in that** the lower portion (7-7d), the plastics part (8, 8a) or the wall (9, 9a, 9c, 9d) is integrally connected to the remainder of the air bag (3).

6. Occupant restraint system according to any one of Claims 1 to 5, **characterised in that** the lower portion (7-7d), the plastics part (8, 8a) or the wall (9, 9a, 9c, 9d) is connected to the remainder of the air bag (3) by a welding process.

7. Occupant restraint system according to any one of Claims 1 to 4, **characterised in that** the lower portion (7-7d), the plastics part (8, 8a) or the wall (9, 9a, 9c, 9d) is connected to the remainder of the air bag (3) by adhesion.

8. Occupant restraint system according to any one of Claims 1 to 4, **characterised in that** the wall (9c) is connected to the air bag (3) or the lower portion (7c) by seams, rivets or the like.

9. Occupant restraint system according to any one of Claims 1 to 8, **characterised in that** the air bag (3), the lower portion (7b-7d) and the wall (9b-9d) are made of the same material.

10. Occupant restraint system according to any one of Claims 1, 3 to 5 and 9, **characterised in that** the air bag (3), the lower portion (7, 7a, 7d) and the wall (9, 9a, 9d) are formed in one piece.

11. Occupant restraint system according to any one of Claims 1, 3, 4 and 9, **characterised in that** a separate component (16), which contains the wall (9b) and tightly encloses the gas generator (4) at least in part, is provided at the lower portion (7b) in order to form the diffusor chamber (6b).

12. Occupant restraint system according to Claim 11, **characterised in that** the component (16) which forms the diffusor chamber (6b) is formed by a flexible air bag material.

13. Occupant restraint system according to any one of Claims 1 to 12, **characterised in that** the parts of the air bag (3) or of the lower portion (7-7d) which form the diffusor chamber (6-6d) are sealed at the housing (1-1d) and/or at the gas generator (4) by positive and/or non-positive fixing or clamping.

14. Occupant restraint system according to any one of Claims 1 to 13, **characterised in that** a thermal coating, preferably of Neoprene, is provided on the inside of the diffusor chamber (6-6d) or at the side of the air bag (3), of the wall (9-9d) or of the lower portion (7-7d) which faces the gas generator (4).

## Revendications

1. Système gonflable de retenue de passager assis, en particulier pour des véhicules automobiles, comportant un coussin à gaz, un générateur de gaz pour gonfler le coussin à gaz en cas de retenue, un espace de diffusion disposé à l'intérieur d'un boîtier pour le coussin à gaz et le générateur de gaz et dans lequel est disposé le générateur de gaz, une paroi contenant les ouvertures de diffusion étant prévue entre l'espace de diffusion et une partie supérieure pliée du coussin à gaz, **caractérisé en ce que** la paroi (9 à 9d) est prévue sur une partie inférieure (7 à 7d) du coussin à gaz (3), séparée par rapport au boîtier et formant au moins en partie l'espace de diffusion (6 à 6d).

2. Système de retenue de passager assis selon la revendication 1, **caractérisé en ce que** la partie inférieure (7 à 7a) est formée par une pièce (8, 8a) en matière synthétique reliée au coussin à gaz (3) et **en ce que** la paroi (9, 9a) est prévue sur cette pièce (8, 8a) en matière synthétique.

3. Système de retenue de passager assis selon la revendication 1 ou 2, **caractérisé en ce que** le générateur de gaz (3) est ancré dans le boîtier (1 à 1d) et **en ce que** la partie inférieure (7 à 7c) ou bien la pièce (8, 8a) en matière synthétique pour former l'espace de diffusion (6 à 6c) et/ou pour l'appui sur le générateur de gaz 4 entoure au moins partiellement le générateur de gaz (4).

4. Système de retenue de passager assis selon l'une des revendications 1 à 3, **caractérisé en ce que** la paroi (9a) comporte un clapet pivotant (14) marqué par un emplacement de rupture préférentielle (rainure 15) et qui, sous l'effet des gaz créés dans le générateur de gaz (4), forme au moins partiellement l'ouverture (10a) de diffusion.

5. Système de retenue de passager assis selon l'une des revendications 1 à 4, **caractérisé en ce que** la partie inférieure (7 à 7d), la pièce (8, 8a) en matière synthétique ou bien la paroi (9, 9a, 9c, 9d) est reliée au coussin à gaz restant (3) par conjugaison de matière.

6. Système de retenue de passager assis selon l'une des revendications 1 à 5, **caractérisé en ce que** la partie inférieure (7 à 7d), la pièce (8, 8a) en matière synthétique ou bien la paroi (9, 9a, 9c, 9d) est reliée au coussin à gaz restant (3) par un procédé de soudage.

7. Système de retenue de passager assis selon l'une des revendications 1 à 4, **caractérisé en ce que** la partie inférieure (7 à 7d), la pièce (8, 8a) en matière synthétique ou bien la paroi (9, 9a, 9c, 9d) est reliée au coussin à gaz restant (3) par collage.

8. Système de retenue de passager assis selon l'une des revendications 1 à 4, **caractérisé en ce que** la paroi (9c) est reliée au coussin à gaz (3) ou à la partie inférieure (7c) par des soudures, des rivets ou similaires.

9. Système de retenue de passager assis selon l'une des revendications 1 à 8, **caractérisé en ce que** le coussin à gaz (3), la partie inférieure (7b à 7d) et la paroi (9b à 9d) sont réalisés dans le même matériau.

10. Système de retenue de passager assis selon l'une des revendications 1, 3 à 5 et 9, **caractérisé en ce que** le coussin à gaz (3), la partie inférieure (7, 7a, 7d) et la paroi (9, 9a, 9d) sont réalisés monobloc.

11. Système de retenue de passager assis selon l'une des revendications 1, 3, 4 et 9, **caractérisé en ce que**, sur la partie inférieure (7b) pour former l'espace de diffusion (6b), est prévu un composant séparé (16) contenant la paroi (9b) et entourant de façon étanche au moins partiellement le générateur de gaz (4).

12. Système de retenue de passager assis selon la revendication 11, **caractérisé en ce que** le composant (16) formant l'espace de diffusion (6b) est formé par un matériau flexible de coussin à gaz.

13. Système de retenue de passager assis selon l'une des revendications 1 à 12, **caractérisé en ce que** les parties du coussin à gaz (3) ou de la partie inférieure (7 à 7d) formant l'espace de diffusion (6 à 6d) sont fixées de façon étanche sur le boîtier (1 à 1d) et/ou sur le générateur de gaz (4) par un serrage ou un pincement par conjugaison de forme et/ou de force.

14. Système de retenue de passager assis selon l'une des revendications 1 à 13, **caractérisé en ce que**, sur la face intérieure de l'espace de diffusion (6 à 6d) ou bien sur la face du coussin à gaz (3) tournée vers le générateur de gaz (4), un revêtement thermique de la paroi (9 à 9d) ou bien de la partie inféneure (7 à 7d) est prévu, de préférence en néoprène.
